# EUROPÄISCHE PATENTSCHRIFT

(11) **EP 1 205 373 B1**
(45) Veröffentlichungstag und Bekanntmachung des Hinweises auf die Patenterteilung: **18.08.2004**
(21) Anmeldenummer: 01125755.7
(22) Anmeldetag: 29.10.2001
(51) Int. Cl.: B62D 5/30, G06F 11/16, B62D 5/04

(54) **Steuerungssystem für ein Stellglied in einem Kraftfahrzeug**
System for controlling an actuator in a vehicle
Système de commande d' un actionneur dans un véhicule

(30) Priorität: 13.11.2000 DE 10056129
(43) Veröffentlichungstag der Anmeldung: 15.05.2002
(73) Patentinhaber: ZF Lenksysteme GmbH, 73527 Schwäbisch Gmünd (DE)
(72) Erfinder: Brenner, Peter, 73563 Mögglingen (DE); Heilig, Arnulf, 73529 Schwäbisch Gmünd (DE); Mayer, Jörg, 73547 Lorch (DE); Fohler, Markus, 71384 Weinstadt (DE)

(56) Entgegenhaltungen:
- DE-A- 4 137 124
- FR-A- 2 696 252
- US-A- 4 546 437
- US-A- 5 107 425
- US-A- 5 193 887

## Beschreibung

Die Erfindung bezieht sich auf ein Steuerungssystem für ein Stellglied in einem Kraftfahrzeug nach dem Oberbegriff des Anspruches 1.

Aus der US 5 193 887 A, insbesondere aus der Beschreibung Spalte 4, Zeilen 65 ff. und der dortigen Figur 1, ist ein derartiges Steuerungssystem für mindestens ein Stellglied (V1, V2, ...) bekannt, bei dem eine Regel- und Steuereinheit in Abhängigkeit von Messdaten, die Sensoren (5) liefern, Stellsignale erzeugt. Außerdem ist eine Kontrolleinheit (8) zur Überwachung der Funktion der Regel- und Steuereinheit vorgesehen, wobei im Fehlerfall das Steuerungssystem abgeschaltet wird. Dieses bekannte Regel-Steuereinheit haben zwei funktional eigenständig arbeitende Funktionseinheiten in Form von zwei Mikrokontrollern (1 und 2), die Berechnungsmodule zur Datenmanipulation umfassen, wobei der erste Mikrokontroller (1) die Sensor-Messdaten auswertet und gemäß einer Berechnungsvorschrift (Programm) die Stellsignale berechnet. Der zweite Mikrokontroller (2) untersucht diese Stellsignale auf Übereinstimmung, damit im Fehlerfall das Steuersystem abgeschaltet werden kann. Diese beiden Funktionseinheiten (microcontrollers 1 und 2) werden in ihrer Funktion von einer Kontrolleinheit (safety circuit 8) überwacht. Über den Aufbau der Kontrolleinheit ist dort nichts näheres beschrieben, was jedoch für ein effektives Zusammenarbeiten der genannten Elemente bedeutsam wäre.

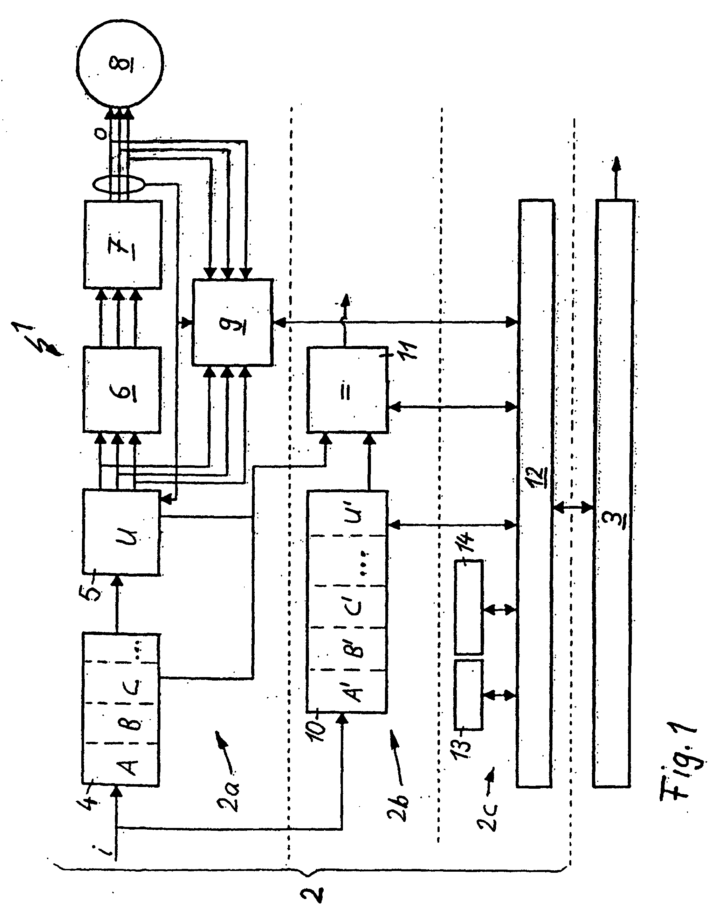

Aus der FR 2 696 252 A ist ebenfalls ein Steuerungssystem der eingangs genannten Art bekannt, wobei dort auch eine weitere, dritte Funktionseinheit (siehe dort "INT" in Fig.1) vorgesehen ist, die zur Kommunikation zwischen den ersten und zweiten Funktionseinheiten (P1 und P2) und einer Kontrolleinheit (CMP) dient. Es wird dort aber nicht näher das Zusammenwirken der Elemente beschrieben.

Die DE 198 34 870 A1 Offenbart einen fehlertoleranten elektromechanischen Lenksteller für eine steer-by-wire-Anwendung in Kraftfahrzeugen. Dem Lenksteller ist eine Regel- und Steuereinheit zugeordnet, in der in Abhängigkeit von Messsignalen eines Lenkwinkelsensors sowie weiterer Zustands- und Betriebsgrößen des Kraftfahrzeugs Stellsignale zur Einstellung eines elektrischen Lenkmotors auf einen vorgegebenen Sollwinkel erzeugt werden. Um im Falle eines Fehlers in einem Sensor oder in einem Subsystem der Regel- und Steuereinheit eine korrekte Lenkfunktion zu ermöglichen, ist der Lenksteller in zwei redundante Systeme unterteilt, wobei jedes System eine Regel- und Steuereinheit und einen zugeordneten Lenkmotor umfasst. Im normalen Betriebsmodus - bei voll funktionstüchtigem Lenksteller - arbeitet nur eines der Systeme aktiv, das zweite System ist dagegen passiv geschaltet. Im Falle eines Fehlers im aktiven Systems kann dieses über ein stromlos öffnenden Relais passiv geschaltet und das bislang passive zweite System aktiviert werden. Außerdem tauschen die beiden Regel- und Steuereinheiten der beiden Systeme permanent Ist-Stellgrößen und Fehlerinformationen aus, wodurch eine Watchdog-Funktion realisiert wird.

Der Lenksteller mit den zwei unabhängig voneinander arbeitenden Systemen erfordert einen hohen Hardware-Aufwand. Darüber hinaus muss zur Realisierung der Watchdog-Funktion auch ein hoher Schaltungsaufwand durchgeführt werden, um die diversen Subsysteme eines Systems mit der Regel- und Steuereinheit des jeweils anderen Systems zu verbinden.

Der Erfindung liegt das Problem zugrunde, ein Steuerungssystem für ein Stellglied in einem Kraftfahrzeug anzugeben, insbesondere ein Lenk-Steuerungssystem, welches bei einem einfachen Aufbau eine hohe Fehlertoleranz aufweist.

Dieses Problem wird erfindungsgemäß mit den Merkmalen des Anspruches 1 gelöst. Die Unteransprüche geben zweckmäßige Weiterbildungen an.

Das erfindungsgemäße Steuerungssystem für ein Stellglied in einem Kraftfahrzeug weist nur eine einzige Regel- und Steuereinheit auf, welche jedoch mit drei funktional eigenständigen Funktionseinheiten ausgestattet ist, die in einer bestimmten Weise zusammen arbeiten und eine mindestens teilweise redundante Berechnung der Stellsignale zur Einstellung des Kraftfahrzeug-Stellgliedes ermöglichen. Die drei Funktionseinheiten innerhalb der Regel- und Steuereinheit arbeiten in einer hierarchisch abgestimmt zusammen, indem die erste Funktionseinheit aus Eingangssignalen gemäß einer hinterlegten Berechnungsvorschrift Stellsignale für das zu manipulierende Stellglied berechnet, in der zweiten Funktionseinheit ein quantitativer Vergleich der Stellsignale der ersten Funktionseinheit mit Vergleichs- bzw. Sollwerten durchgeführt wird, wobei im Fehlerfall das Steuerungssystem abgeschaltet wird, und in der dritten Funktionseinheit die Kommunikation mit der separat ausgebildeten Kontrolleinheit durchgeführt wird. Sowohl jede der drei Funktionseinheiten als auch die separate Kontrolleinheit sind unabhängig voneinander in der Lage, das Steuerungssystem abzuschalten. In dieser Ausführung, in der insbesondere die ersten beiden Funktionseinheiten zumindest teilweise als Software in der Regel- und Steuereinheit realisiert sind, kann bei einem hohen Sicherheitsniveau die Anzahl der für das Steuerungssystem benötigten Bauteile gering gehalten werden, wodurch Kosten und Bauraum reduziert werden und die Zuverlässigkeit erhöht wird.

Um bei geringer Rechenzeit eine möglichst hohe Sicherheitsstufe zu erreichen, werden **erfindungsgemäß** in der zweiten Funktionseinheit in zwei aufeinander folgenden Berechnungszyklen, insbesondere in zwei unmittelbar aufeinander folgenden Berechnungszyklen, die Berechnungen bzw. Ergebnisse aus zwei unterschiedlichen Subsystemen bzw. Berechnungsmodulen der ersten Funktionseinheit redundant überprüft. Es kann beispielsweise pro Berechnungszyklus in der ersten Funktionseinheit ein Stellsignal in einem ersten Berechnungsmodul generiert werden, welches ein Zwischenergebnis darstellt, das in nachfolgenden Berechnungsmodulen der ersten Funktionseinheit weiteren Manipulationen unterzogen wird. Im gleichen Berechnungszyklus wird in der zweiten Funktionseinheit eine redundante Berechnung in einem ersten Berechnungsmodul der zweiten Funktionseinheit durchgeführt, die analog zu der Berechnung des ersten Berechnungsmoduls der ersten Funktionseinheit oder einer Untereinheit des ersten Berechnungsmoduls aufgebaut ist. Auf diese Weise erhält man in der zweiten Funktionseinheit einen Vergleichswert für ein Zwischenergebnis aus der ersten Funktionseinheit. In einem nachgeschalteten Vergleichsblock kann das Zwischenergebnis aus der ersten Funktionseinheit mit dem zugeordneten Vergleichswert aus der zweiten Funktionseinheit verglichen werden, wobei im Falle einer unzulässig hohen Abweichung ein Fehlersignal generiert wird, das zur Anzeige gebracht wird und/oder das Steuerungssystem ausschaltet bzw. in einen Sicherheitszustand (failsafe-Zustand) schaltet, in welchem die Unterstützung abgeschaltet wird und ein ausschließlich mechanischer, hydraulischer oder pneumatischer Durchgriff auf die zu manipulierende Fahr zeugkomponente gegeben ist und/oder auf alternative Stellgliedder umgeschaltet wird. Die Rechenzeiteinsparung wird dadurch erzielt, dass in der zweiten Funktionseinheit nur eine Untermenge aus den in der ersten Funktionseinheit vollständig auszuführenden Berechnungen durchgeführt wird.

In einer bevorzugten Weiterbildung werden die Vergleichswerte aus der zweiten Funktionseinheit pro Berechnungszyklus lediglich für einen Teil der Berechnungsschritte der ersten Funktionseinheit ermittelt und auf Übereinstimmung überprüft, wodurch eine signifikante Recheneinsparung erreicht wird, da in der zweiten Funktionseinheit nicht die gleiche Anzahl an Berechnungsschritten wie in der ersten Funktionseinheit durchgeführt werden muss, sondern lediglich eine Untermenge hiervon. Über die Auswahl der Berechnungen, welche in der zweiten Funktionseinheit durchgeführt werden, kann Einfluss genommen werden auf das gewünschte Sicherheitsniveau, mit dem das Steuerungssystem betrieben werden soll. Die Auswahl kann unter dem Gesichtspunkt besonders fehleranfälliger Subsysteme bzw. Berechnungsmodule der ersten Funktionseinheit getroffen werden.

In einem folgenden Berechnungszyklus werden in der ersten Funktionseinheit bevorzugt wiederum sämtliche Berechnungsmodule zur Ermittlung des das Stellglied beaufschlagenden Stellsignals durchlaufen. In der zweiten Funktionseinheit wird nun im Unterschied zum ersten Berechnungszyklus ein Berechnungsergebnis aus einem anderen Berechnungsmodul ermittelt, so dass in aufeinander folgenden Berechnungszyklen unterschiedliche Berechnungsmodule der ersten Funktionseinheit auf Funktionstüchtigkeit überprüft werden, wobei im Fehlerfall wiederum ein Fehlersignal erzeugt wird.

Auf diese Weise kann pro Berechnungszyklus in der zweiten Funktionseinheit ein Berechnungsmodul der ersten Funktionseinheit überprüft werden.

Zweckmäßig weisen die erste Funktionseinheit und die zweite Funktionseinheit eine identische Anzahl gleich aufgebauter Berechnungsmodule auf, wobei in der zweiten Funktionseinheit pro Berechnungszyklus lediglich eine Untermenge an Berechnungsmodulen durchlaufen wird, deren Ergebnisse zum Vergleich der zugeordneten Berechnungsmodule der ersten Funktionseinheit herangezogen werden.

Die dritte Funktionseinheit innerhalb der Regel- und Steuereinheit ist zweckmäßig als Kommunikationseinheit ausgeführt, die mit der separat ausgebildeten Kontrolleinheit kommuniziert, wobei die Kontrolleinheit bevorzugt sowohl den ordnungsgemäßen Ablauf einzelner Berechnungsmodule aus der ersten Funktionseinheit als auch den ordnungsgemäßen Ablauf der Module der zweiten Funktionseinheit überprüft und im Falle einer Fehlfunktion das System abschaltet.

Weitere Vorteile und zweckmäßige Ausführungen sind den weiteren Ansprüchen, der Figurenbeschreibung und den Zeichnungen zu entnehmen. Es zeigen:
- Fig. 1: ein Blockschaltbild mit der Struktur eines Steuersystems zur Beaufschlagung eines Stellgliedes in einem Kraftfahrzeug, bestehend aus einer Regel- und Steuereinheit mit drei funktional eigenständigen Funktionseinheiten und einer separat ausgebildeten Kontrolleinheit,
- Fig. 2: eine schematische Darstellung der zyklischen Überprüfung der Ergebnisse aus Berechnungen in der ersten Funktionseinheit durch Vergleich mit Sollwerten aus der zweiten Funktionseinheit,
- Fig. 3: eine Fig. 2 entsprechende Darstellung, jedoch mit sich unterscheidenden Berechnungsmodulen, die wiederkehren, jedoch in größeren Zeitabständen überprüft werden,
- Fig. 4: ein Blockschaltbild mit einer detaillierten Darstellung des Vergleichs von Ausgangsgrößen aus Berechnungsmodulen der ersten Funktionseinheit mit Berechnungsmodulen der zweiten Funktionseinheit.

In den folgenden Figuren sind gleiche Bauteile und Module mit gleichen Bezugszeichen versehen.

In dem Blockschaltbild nach Fig. 1 ist ein Steuerungssystem 1 für ein Stellglied 8 in einem Kraftfahrzeug schematisch dargestellt. Bei dem gezeigten Steuerungssystem handelt es sich bevorzugt um ein Lenk-Unterstützungssystem; dementsprechend ist das Stellglied 8 als elektrisch betätigbarer Lenkunterstützungsmotor ausgeführt, über den das Lenkmoment des Fahrers verstärkt wird.

Es kommen gegebenenfalls aber auch andere Unterstützungsanwendungen oder auch Anwendungen aus dem Bereich X-by-wire in Betracht, beispielsweise steer-by-wire-Funktionen, drive-by-wire-Funktionen oder break-by-wire-Funktionen.

Das Steuerungssystem 1 umfasst eine Regel- und Steuereinheit 2, die in drei Funktionseinheiten 2a, 2b und 2c unterteilt ist, sowie eine von der Regel- und Steuereinheit 2 separat ausgebildete Kontrolleinheit 3, die die Funktionsfähigkeit von Subsystemen der Regel- und Steuereinheit überprüft.

Die erste Funktionseinheit 2a der Regel- und. Steuereinheit 2 umfasst eine Mehrzahl an Berechnungs- und Bearbeitungsblöcken 4, 5, 6, 7 und 9, in denen aus Eingangssignalen i Ausgangssignale o generiert werden, die dem Stellglied 8, welches insbesondere als Elektromotor ausgebildet ist, zur Einstellung zugeführt werden. In einem ersten eingangsseitigen Berechnungsblock 4, der als Software in der ersten Funktionseinheit 2a abgelegt ist, werden die Eingangssignale i, bei denen es sich insbesondere um Lenkwinkelsignale eines Lenkwinkelsensors handelt, ausgewertet. Aus diesen Signalen werden gemäß einer hinterlegten Berechnungsvorschrift in einzelnen Berechnungsmodulen A, B, C etc., in denen einzelne Berechnungsschritte durchgeführt werden, Ausgangssignale erzeugt, die dem nächsten Verarbeitungsblock zugeführt werden, einem Motorregler 5. Die im Berechnungsblock 4 erzeugten und dem Motorregler 5 zuzuführenden Signale repräsentieren ein Motor-Sollmoment, insbesondere eine Soll-Lenkunterstützungskraft, mit dem das Stellglied 8 zu beaufschlagen ist. Im Motorregler 5 wird in Abhängigkeit der dem Motorregler zugeführten Signale, die zusätzlich zu dem Motor-Sollmoment auch Informationen über die Drehzahl n des Stellglieds.8 sowie Informationen über die Motorspannung, mit der das Stellglied 8 beaufschlagt wird, eine Sollspannung generiert, die dem darauf folgenden Block 6 zugeführt wird. Auch der Motorregler ist als Software in der ersten Funktionseinheit 2a hinterlegt.

Bei den Blöcken 6 und 7 handelt es sich um einen Pulsweitenmodulierer und einen Stromverstärker, in denen der dem Stellglied 8 zuzuführende Strom gesteuert wird. Dem Pulsweitenmodulierer 6 und dem Stromverstärker 7, die beide als Hardware in der ersten Funktionseinheit 2a realisiert sind, ist eine Spannungsdiagnoseeinheit 9 zugeordnet, der sowohl die dem Pulsweitenmodulierer 6 zuzuführende Eingangsspannung als auch die im Stromverstärker 7 generierte Ausgangsspannung für das Stellglied 8 zugeführt. wird und in welcher eine Datenüberprüfung dieser Spannungswerte durchgeführt wird. Die Spannungsdiagnoseeinheit 9 ist zweckmäßig ebenfalls als Software ausgeführt und in der ersten Funktionseinheit 2a hinterlegt.

In der zweiten Funktionseinheit 2b der Regel- und Steuereinheit 2 ist ein weiterer Berechnungsblock 10 vorgesehen, der eine Reihe von Berechnungsmodulen A', B', C etc. sowie U' umfasst, die jeweils gleich aufgebaut sind wie die Berechnungsmodule A, B, C etc. aus dem Berechnungsblock 4 bzw. wie das Berechnungsmodul U aus dem Motorregler 5 der ersten Funktionseinheit 2a. Zweckmäßig umfasst der Berechnungsblock 10 der zweiten Funktionseinheit 2b die gleiche Anzahl an einzelnen Berechnungsmodulen wie der Berechnungsblock 4 und der Motorregler 5 aus der ersten Funktionseinheit 2a. Die im Berechnungsblock 10 der zweiten Funktionseinheit 2b enthaltenen Berechnungsmodule A', B', C' etc. sowie U' sind redundant zu den. entsprechenden Berechnungsmodulen A, B, C, etc. und U der ersten Funktionseinheit 2a ausgeführt. Im Berechnungsblock 10 werden identische Berechnungen in Abhängigkeit der Eingangssignale i wie im Berechnungsblock 4 und im Motorregler 5 der ersten Funktionseinheit 2a ausgeführt, wobei aus Rechenzeitgründen zweckmäßig pro Berechnungszyklus in der zweiten Funktionseinheit 2b nur jeweils eine Untermenge der Berechnungen aus der ersten Funktionseinheit 2a durchgeführt wird.

Dem Berechnungsblock 10 aus der zweiten Funktionseinheit 2b ist ein Vergleichsblock 11 nachgeschaltet, dem als Eingangssignale die Berechnungsergebnisse aus den einzelnen Berechnungsmodulen A, B, C. etc. und U aus dem Berechnungsblock 4 bzw. dem Motorregler 5 der ersten Funktionseinheit 2a sowie die Ergebnisse der korrespondierenden und aktuell dürchgeführten Berechnungsmodule A', B', C', etc. sowie U' des Berechnungsblocks 10 aus der zweiten Funktionseinheit 2b zugeführt werden. Im Vergleichsblock 11 erfolgt ein Vergleich der Berechnungsergebnisse zwischen zugeordneten Berechnungsmodulen A-A', B-B', C-C', etc. sowie U-U'. Sofern die Ergebnisse innerhalb einer zulässigen Toleranz übereinstimmen, kann von Funktionstüchtigkeit der überprüften Blöcke bzw. Module ausgegangen werden. Falls die Ergebnisse unter Berücksichtigung einer vorgegebenen Toleranz in unzulässiger Weise voneinander abweichen, liegt eine Fehlfunktion vor und das Steuerungssystem wird abgeschaltet.

Sowohl der Berechnungsblock 10 als auch der Vergleichsblock 11 der zweiten Funktionseinheit 2b sind als Software in der Regelund Steuereinheit 2 realisiert. Der Berechnung in den einzelnen Berechnungsmodulen A', B', C', etc. sowie U' im Berechnungsblock 10 ist zweckmäßig eine mathematische Bibliothek mit Standardfunktionen unterlegt, wohingegen die Berechnung im Berechnungsblock 4 und im Motorregler 5 der ersten Funktionseinheit 2a ohne eine derartige mathematische Bibliothek erfolgt. Die Funktionseinheit 2b dient zur Überwachung der Funktionen aus der ersten Funktionseinheit 2a.

In der dritten Funktionseinheit 2c ist eine Hardware-Überwachung innerhalb der Regel- und Steuereinheit 2 realisiert.. Hierzu ist eine Kommunikationseinheit 12 vorgesehen, die zum einen mit Blöcken und Modulen der ersten beiden Funktionseinheiten.2a und 2b und zum anderen mit der extern ausgebildeten Kontrolleinheit 3 (Watchdog) kommuniziert. In der dritten Funktionseinheit wird der ordnungsgemäße Ablauf aller Module und Blöcke der ersten beiden Funktionseinheiten überwacht und werden sicherheitsrelevante Hardware-Komponenten der Regel- und Steuereinheit auf Funktionstüchtigkeit geprüft. Die gegenseitige Überwachung von Regel- und Steuereinheit 2 und Kontrolleinheilt 3 basiert auf einer Frage-Antwort-Logik, bei der sowohl der ordnungsgemäße Durchlauf der Blöcke bzw. Module als auch die Funktion dieser Blöcke bzw. Module überprüft wird. Hierbei werden von der Kontrolleinheit 3 Fragen gestellt und über die Kommunikationseinheit 12 an die Regel- und Steuereinheit 2 weitergeleitet, die von den einzelnen Modulen bzw. Blöcken der Funktionseinheiten 2a und 2b beantwortet werden müssen, insbesondere in einem festgelegten Ablauf und innerhalb definierter Zeitfenster. Die gestellte Frage besteht beispielsweise aus einer Binärzahl, die mit einer zugehörigen Binärzahl innerhalb des definierten Zeitfensters beantwortet werden muss. Über die Bit-Länge der Binärzahlen kann die Wahrscheinlichkeit, dass durch Zufall eine richtige Antwort geliefert wird, gesteuert werden. Wird ein Fehler detektiert, so kann das Steuerungssystem von der Kontrolleinheit 3 abgeschaltet werden.

Zweckmäßig wird auch die Kontrolleinheit 3 überwacht. Durch eine in der Kommunikationseinheit 12 durchgeführte Abfragelogik kann überprüft werden, ob die Kontrolleinheit 3 innerhalb definierten Zeitfenster die geforderten Fragen stellt. Falls die Fragen nicht innerhalb des Zeitfensters geliefert werden o-oder einen falschen Fragewert aufweisen, kann das gesamte Steuerungssystem 1 von der Kommunikationseinheit 12 abgeschaltet werden

Die Kommunikationseinheit 12 kommuniziert zweckmäßig mit einer Prozessorüberprüfungseinheit 13, mit der Prozessorkomponenten, beispielsweise Addierer, auf Funktionsfähigkeit überprüft werden können, und mit einer Speicherüberprüfungseinheit 14, die den Speicher des Steuerungssystems auf Funktionstüchtigkeit überprüft.

Im Ausführungsbeispiel überprüft die Kommunikationseinheit 12 den Berechnungsblock 10 und den Vergleichsblock 11 aus der zweiten Funktionseinheit 2b und die Spannungsdiagnoseeinheit 9 aus der ersten Funktionseinheit 2a.

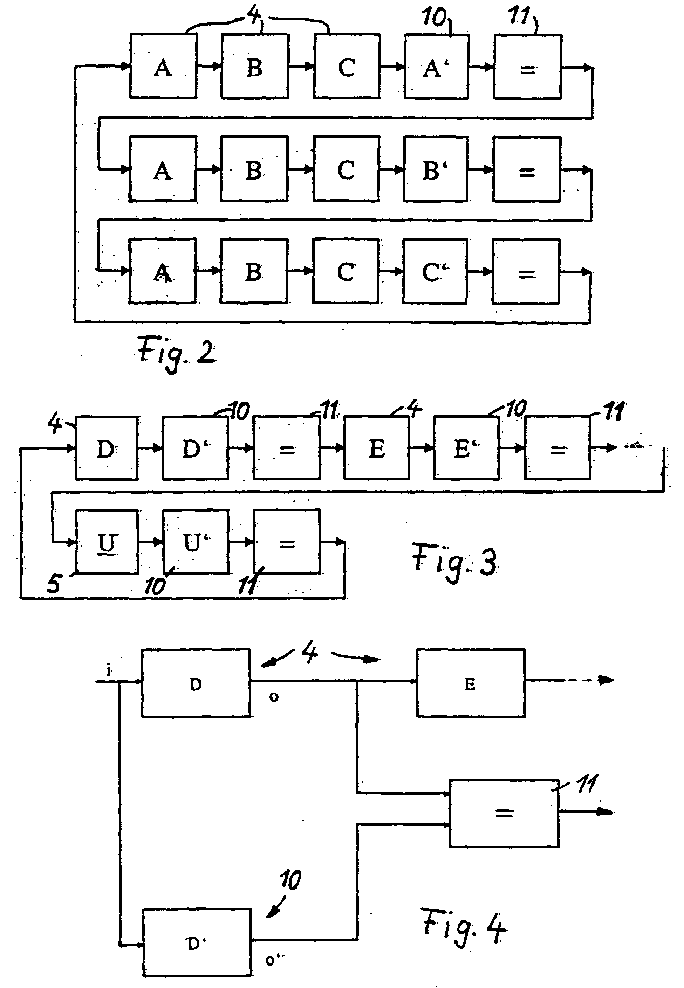

Fig. 2 symbolisiert die Logik, mit der die zweite Funktionseinheit 2b die Funktionen der ersten Funktionseinheit 2a überwacht. Dargestellt sind drei Reihen mit jeweils einer Mehrzahl von Berechnungsmodulen A, B, C, die gemäß Fig. 1 dem Berechnungsblock 4 der ersten Funktionseinheit 2a zugeordnet sind, einem nachfolgenden Berechnungsmodul A' (1. Reihe) bzw. B' (2. Reihe) bzw. C' (3. Reihe), das dem Berechnungsblock 10 der zweiten Funktionseinheit 2b zugeordnet ist, und dem Vergleichsblock 11 der zweiten Funktionseinheit 2b. Jede Reihe repräsentiert einen Berechnungszyklus; die Reihen werden zeitlich aufeinander folgend abgearbeitet, beispielsweise in einem Zeitabstand von 1 ms.

In der Ablauflogik nach Fig. 2 werden in jedem Berechnungszyklus zunächst die Berechnungsmodule A, B und C des ersten Berechnungsblocks der ersten Funktionseinheit abgearbeitet. In der ersten Reihe wird zusätzlich das Berechnungsmodul A' des zweiten Berechnungsblocks der zweiten Funktionseinheit ermittelt, wobei im nachfolgenden Vergleichsblock 11 die Ergebnisse A und A' verglichen werden und im Fehlerfall ein Abschaltsignal generiert wird. Die folgenden Reihen laufen analog ab, wobei in jeder Reihe jeweils nur ein einziges Berechnungsmodul der zweiten Funktionseinheit ausgeführt wird, welches mit dem korrespondierenden Berechnungsmodul der ersten Funktionseinheit verglichen wird. In jedem neuen Berechnungszyklus wird ein weiteres Berechnungsmodul in der zweiten Funktionseinheit ermittelt. Dieser Ablauf wird so lange durchgeführt, bis sämtliche Berechnungsmodule der ersten Funktionseinheit mit dem zugeordneten Berechnungsmodul der zweiten Funktionseinheit verglichen worden sind. Da im Ausführungsbeispiel nach Fig. 2 insgesamt drei Berechnungsmodule A, B, C in der ersten Funktionseinheit vorgesehen sind, ist nach insgesamt drei Berechnungszyklen die Überwachungslogik vollständig durchlaufen.

Die Ablauflogik nach Fig. 3 zeigt einen zusätzlich durchzuführenden Berechnungszyklus, welcher in größeren Zeitabständen, verglichen mit den Zyklen der Logik aus Fig. 2, durchgeführt wird. So kann beispielsweise vorgesehen sein, die Überwachung gemäß Fig. 3 nur bei jedem zehnten Berechnungszyklus durchzuführen, also alle 10 ms, falls die Berechnungszyklen aus Fig. 2 im 1 ms-Abstand durchgeführt werden.

Dargestellt ist in Fig. 3 ein einzelner Berechnungszyklus mit jeweils zwei Berechnungsmodulen D und D', E und E' und U und U' aus dem Berechnungsblock 4 bzw. dem Motorregler 5 der ersten Funktionseinheit und dem Berechnungsblock 10 der zweiten Funktionseinheit, wobei jeweils zwei zugeordnete Berechnungsmodule in einem folgenden Vergleichsblock 11 miteinander verglichen werden und m Fehlerfall ein Abschaltsignal erzeugt wird.

Fig. 4 zeigt eine detailliertere Darstellung des Vergleichs von zwei Berechnungsmodulen D und D' unterschiedlicher Berechnungsblöcke 4 bzw. 10 der ersten bzw. zweiten Funktionseinheit. In beiden Berechnungsmodulen D und D' werden in Abhängigkeit von Eingangssignalen i Ausgangsgrößen o bzw. o' ermittelt, die dem Vergleichsblock 11 zugeführt werden, in welchem ein Vergleich zwischen diesen Größen durchgeführt wird. Weichen die Ausgangsgrößen in unzulässiger Weise voneinander ab, wird ein Ausschaltsignal generiert. Andernfalls wird die Berechnung im Berechnungsmodül E fortgesetzt.

### Bezugszeichenliste

- 1: Steuerungssystem
- 2: Regel- und Steuereinheit
- 2a,2b,2c: Funktionseinheit
- 3: Kontrolleinheit
- 4: Berechnungsblock
- 5: Motorregler
- 6: Pulsweitenmodulierer
- 7: Stromverstärker
- 8: Stellglied
- 9: Spannungsdiagnoseeinheit
- 10: Berechnungsblock
- 11: Vergleichsblock
- 12: Kommunikationseinheit
- 13: Prozessor-Oberprüfungseinheit
- 14: Speicherüberprüfungseinheit

## Patentansprüche

1. Steuerungssystem für ein Stellglied in einem Kraftfahrzeug, insbesondere Lenk-Steuerungssystem, mit einer Regel- und Steuereinheit (2), welche in Abhängigkeit von Messdaten mindestens eines Sensors Stellsignale zur Einstellung des Stellgliedes (8) erzeugt, und mit einer Kontrolleinheit (3) zur Überwachung der Funktion der Regel- und Steuereinheit (2), wobei im Fehlerfall das Steuerungssystem (1) abgeschaltet wird,
bei dem
in der Regel- und Steuereinheit (2) drei funktional eigenständig arbeitende Funktionsebenen bzw. -einheiten (2a, 2b, 2c) vorgesehen sind, von denen zumindest die ersten beiden Funktionsebenen bzw. -einheiten (2a, 2b) jeweils mindestens ein Berechnungsmodul (A, B, C, U, A', B', C', U') zur Datenmanipulation umfassen, wobei
- die erste Funktionseinheit (2a) die Messdaten des mindestens einen Sensors auswertet und gemäß einer hinterlegten Berechnungsvorschrift die Stellsignale für das Stellglied (8) berechnet,
- die zweite Funktionseinheit (2b) die Stellsignale der ersten Funktionseinheit (2a) auf Übereinstimmung mit Sollwerten untersucht, wobei im Fehlerfall das Steuerungssystem (1) abgeschaltet wird, **dadurch gekennzeichnet, dass**
- die dritte Funktionseinheit (2c) die Kommunikation mit der Kontrolleinheit (3) steuert, die sowohl die Funktion der Berechnungsmodule (A, B, C, U) der ersten Funktionseinheit (2a) als auch die Funktion der Berechnungsmodule (A', B', C', U') der zweiten Funktionseinheit (2b) überwacht,
*und dass*
- in der zweiten Funktionseinheit (2b) in zwei aufeinander folgenden Berechnungszyklen die Berechnungsergebnisse aus zwei verschiedenen Berechnungsmodulen (A, B, C, U) der ersten Funktionseinheit (2a) redundant überprüft werden.

2. Steuerungssystem nach Anspruch 1,
**dadurch gekennzeichnet,**
**dass** die erste Funktionseinheit (2a) und die zweite Funktionseinheit (2b) zumindest teilweise als in der Regel- und Steuereinheit (2) abgespeicherte und ablaufende Software realisiert sind.

3. Steuerungssystem nach Anspruch 1 oder 2,
**dadurch gekennzeichnet,**
**dass** in der zweiten Funktionseinheit (2b) die Sollwerte für einen Teil der Berechnungen der ersten Funktionseinheit (2a) redundant ermittelt und auf Übereinstimmung mit den Berechnungsergebnissen der ersten Funktionseinheit (2a) überprüft werden.

4. Steuerungssystem nach einem der Ansprüche 1 bis, 3,
**dadurch gekennzeichnet,**
**dass** die zweite Funktionseinheit (2b) ein Berechnungsmodul (A', B', C', U') zur redundanten Berechnung von Sollwerten und einen Vergleichsblock (11) zum Vergleich der Sollwerte mit den Stellsignalen eines Berechnungsmoduls (A, B, C, U) der ersten Funktionseinheit (2a) umfasst.

5. Steuerungssystem nach einem der Ansprüche 1 bis 4,
**dadurch gekennzeichnet,**
**dass** in der Kontrolleinheit (3) der ordnungsgemäße Ablauf der Berechnungsmodule (A, B, C, U) der ersten Funktionseinheit der Regel- und Steuereinheit (2) zyklisch abgefragt wird.

6. Steuerungssystem nach einem der Ansprüche 1 bis 5,
**dadurch gekennzeichnet,**
**dass** in der Kontrolleinheit (3) der ordnungsgemäße Ablauf der Berechnungsmodule (A', B', C', U') der zweiten Funktionseinheit (2b) der Regel- und Steuereinheit (2) zyklisch abgefragt wird.

7. Steuerungssystem nach Anspruch 5 oder 6,
**dadurch gekennzeichnet,**
**dass** für eine ordnungsgemäße Funktion in dem zu überprüfenden Berechnungsmodul (A, B, C, U, A', B', C', U') innerhalb eines Zeitfensters ein Signal mit einem vorgegebenen Wert generiert werden muss.

8. Steuerungssystem nach einem der Ansprüche 1 bis 7,
**dadurch gekennzeichnet,**
**dass** in der ersten Funktionseinheit (2a) in einem ersten Berechnungsmodul (A, B, C) eine Soll-Lenkunterstützungskraft oder eine damit korrelierende Große generiert wird.

9. Steuerungssystem nach Anspruch 8,
**dadurch gekennzeichnet,**
**dass** in der ersten Funktionseinheit (2a) in einem zweiten Berechnungsmodul (U), das als Motorregler (5) für einen Lenkunterstützungsmotor fungiert, aus der Soll-Lenkunterstützungskraft oder der damit korrelierenden Größe ein Sollwert für den Lenkunterstützungsmotor generiert wird.

## Claims

1. Control system for an actuator element in a motor vehicle, in particular steering control system, having a control unit (2) which, as a function of measurement data of at least one sensor, generates actuation signals for setting the actuator element (8), and having a monitoring unit (3) for monitoring the function of the control unit (2), the control system (1) being switched off in the event of a fault, three functional levels or units (2a, 2b, 2c) which operate in a functionally independent fashion being provided in the control unit (2), of which functional levels or units at least the first two functional levels or units (2a, 2b) each comprise at least one calculation module (A, B, C, U, A', B', C', U') for manipulating data,
- the first functional unit (2a) evaluating the measurement data of the at least one sensor and calculating the actuation signals for the actuator element (8) according to a stored calculation rule,
- the second functional unit (2b) examining the actuation signals of the first functional unit (2a) for correspondence with setpoint values, the control system (1) being switched off in the event of a fault, **characterized in that**
- the third functional unit (2c) controls the communication with the monitoring unit (3) which monitors both the function of the calculation modules (A, B, C, U) of the first functional unit (2a) and the operation of the calculation modules (A', B', C', U') of the second functional unit (2b), and **in that**
- the calculation results from two different calculation modules (A, B, C, U) of the first functional unit (2a) are checked redundantly in two successive calculation cycles in the second functional unit (2b).

2. Control system according to Claim 1, **characterized in that** the first functional unit (2a) and the second functional unit (2b) are implemented at least partially as software which is stored and runs in the control unit (2).

3. Control system according to Claim 1 or 2, **characterized in that** the setpoint values for some of the calculations of the first functional unit (2a) are determined redundantly in the second functional unit (2b) and checked for correspondence with the calculation results of the first functional unit (2a).

4. Control system according to one of Claims 1 to 3, **characterized in that** the second functional unit (2b) comprises a calculation module (A', B', C', U') for redundantly calculating setpoint values, and a comparison block (11) for comparing the setpoint values with the actuation signals of a calculation module (A, B, C, U) of the first functional unit (2a).

5. Control system according to one of Claims 1 to 4, **characterized in that** the satisfactory operation of the calculation modules (A, B, C, U) of the first functional unit of the control unit (2) is checked cyclically in the monitoring unit (3).

6. Control system according to one of Claims 1 to 5, **characterized in that** the satisfactory operation of the calculation modules (A', B', C', U') of the second functional unit (2b) of the control unit (2) is checked cyclically in the monitoring unit (3).

7. Control system according to Claim 5 or 6, **characterized in that** a signal with a predefined value has to be generated within a time window for satisfactory functioning in the calculation module (A, B, C, U, A', B', C', U') to be checked.

8. Control system according to one of Claims 1 to 7, **characterized in that** a setpoint power steering force or a variable which correlates therewith is generated in a first calculation module (A, B, C) in the first functional unit (2a).

9. Control system according to Claim 8, **characterized in that** a setpoint value for the power steering motor is generated from the setpoint power steering force or the variable which correlates therewith in the first functional unit (2a), in a second calculation module (U) which functions as an engine controller (5) for a power steering motor.

## Revendications

1. Système de commande pour un organe de commande dans un véhicule automobile, notamment un système de commande de direction, comprenant une unité de régulation et de commande (2) qui produit, en fonction des données mesurées par au moins un capteur, des signaux de commande pour le réglage de l'organe de commande (8), et comprenant une unité de contrôle (3) pour surveiller le fonctionnement de l'unité de régulation et de commande (2), le système de commande étant désactivé en cas de défaut, avec lequel trois niveaux ou unités fonctionnels (2a, 2b, 2c) indépendants du point de vue fonctionnel sont prévus dans l'unité de régulation et de commande (2), dont au moins les deux premiers niveaux ou unités fonctionnels (2a, 2b) comprennent à chaque fois au moins un module de calcul (A, B, C, U, A', B', C', U') pour la manipulation des données,
- la première unité fonctionnelle (2a) analysant les données mesurées de l'au moins un capteur et calculant les signaux de commande pour l'organe de commande (8) conformément à une règle de calcul enregistrée,
- la deuxième unité fonctionnelle (2b) vérifiant la concordance des signaux de commande de la première unité fonctionnelle (2a) avec des valeurs de consigne, le système de commande (1) étant désactivé en cas de défaut,
**caractérisé en ce que**
- la troisième unité fonctionnelle (2c) commande la communication avec l'unité de contrôle (3) qui surveille à la fois le fonctionnement des modules de calcul (A, B, C, U) de la première unité fonctionnelle (2a) et le fonctionnement des modules de calcul (A', B', C', U') de la deuxième unité fonctionnelle (26),
et que
- dans la deuxième unité fonctionnelle (2b), les résultats des calculs de deux modules de calcul différents (A, B, C, U) de la première unité fonctionnelle (2a) sont soumis à un contrôle redondant dans deux cycles de calcul successifs.

2. Système de commande selon la revendication 1, **caractérisé en ce que** la première unité fonctionnelle (2a) et la deuxième unité fonctionnelle (2b) sont au moins partiellement réalisées sous la forme de logiciels enregistrés et exécutés dans l'unité de régulation et de commande (2).

3. Système de commande selon la revendication 1 ou 2, **caractérisé en ce que** les valeurs de consigne pour une partie des calculs de la première unité fonctionnelle (2a) sont déterminées de manière redondante dans la deuxième unité fonctionnelle (2b) et sont soumises à un contrôle de concordance avec les résultats des calculs de la première unité fonctionnelle (2a).

4. Système de commande selon l'une des revendications 1 à 3, **caractérisé en ce que** la deuxième unité fonctionnelle (2b) comprend un module de calcul (A', B', C', U') pour le calcul redondant des valeurs de consigne et un bloc comparateur (11) pour comparer les valeurs de consigne avec les signaux de commande d'un module de calcul (A, B, C, U) de la première unité fonctionnelle (2a).

5. Système de commande selon l'une des revendications 1 à 4, **caractérisé en ce que** le bon déroulement des modules de calcul (A, B, C, U) de la première unité fonctionnelle de l'unité de régulation et de commande (2) est interrogé de manière cyclique dans l'unité de contrôle (3).

6. Système de commande selon l'une des revendications 1 à 5, **caractérisé en ce que** le bon déroulement des modules de calcul (A', B', C', U') de la deuxième unité fonctionnelle (2b) de l'unité de régulation et de commande (2) est interrogé de manière cyclique dans l'unité de contrôle (3).

7. Système de commande selon la revendication 5 ou 6, **caractérisé en ce que** pour le bon fonctionnement dans le module de calcul (A, B, C, U, A', B', C', U') à contrôler, il faut générer dans une fenêtre de temps un signal ayant une valeur prédéfinie.

8. Système de commande selon l'une des revendications 1 à 7, **caractérisé en ce qu'**une force de consigne d'assistance à la direction ou une grandeur corrélée à celle-ci est générée dans la première unité fonctionnelle (2a) dans un premier module de calcul (A, B, C).

9. Système de commande selon la revendication 8, **caractérisé en ce qu'**une valeur de consigne pour le moteur d'assistance à la direction est générée à partir de la force de consigne d'assistance à la direction ou de la grandeur corrélée à celle-ci dans la première unité fonctionnelle (2a) dans un deuxième module de calcul (U) qui fait office de régulateur de moteur (5) pour un moteur d'assistance à la direction.
